# EUROPEAN PATENT SPECIFICATION

(11) **EP 2 232 949 B1**
(45) Date of publication and mention of the grant of the patent: **02.11.2011**
(21) Application number: 09702654.6
(22) Date of filing: 16.01.2009
(51) Int. Cl.: H05B 33/08

(54) **IMPROVEMENTS IN AND RELATING TO LOW POWER LIGHTING**
VERBESSERUNGEN BEI ODER IN ZUSAMMENHANG MIT NIEDRIGLEISTUNGSBELEUCHTUNG
AMÉLIORATIONS APPORTÉES OU RELATIVES À UN ÉCLAIRAGE DE FAIBLE PUISSANCE

(30) Priority: 16.01.2008 GB 0800755
(43) Date of publication of application: 29.09.2010
(73) Proprietor: Melexis NV, 8900 Ieper (BE)
(72) Inventor: MELNYK, Oleksander, 03115 Kiev (UA)
(74) Representative: Wilson Gunn
(86) International application number: PCT/IB2009/000067
(87) International publication number: WO 2009/090543

(56) References cited:
- WO-A-2005/107328
- US-A1- 2003 146 715
- US-A1- 2007 267 984

## Description

The present invention relates to supplying power to low power lighting and in particular to supplying power to low power lighting via a TRIAC.

In an increasing number of locations, low energy light sources such as LEDs are used to provide illumination. Such light sources are typically powered from an AC mains supply via a TRIAC. This arrangement is suitable for operation as long as the current through the TRIAC is above its threshold current. Whilst this is the case if incandescent bulbs or similar are operated through dimmer switches, this is not necessarily the case if a low power light source is operated by a dimmer switch. In such circumstances when the current drops too low, the TRIAC will trigger but will not continue operating and the light source will thus become unpowered. This prevents operation over the full range of the dimmer switch.

It is therefore an object of the present invention to at least partially overcome or alleviate such problems.

Document WO 2005/107328 A2 discloses a switching circuit for driving an electronic light generation element with a periodic pulse train.

According to a first aspect of the present invention there is provided a method of driving a load wherein the load is supplied with power via a TRIAC comprising the steps of drawing a pulsed current from the TRIAC, the magnitude of the current pulses being larger than the minimum current required for reliable triggering and ongoing operation of the TRIAC and the duration of the current pulses being shorter than the reaction period of the TRIAC.

In the above manner, the pulsed current ensures that the TRIAC does not shut down when there is a low throughput of power, unlike the situation wherein an equivalent power is drawn via a steady state current of less than the TRIAC threshold current.

According to the second aspect of the present invention there is provided a driver circuit suitable for being provided between a TRIAC controlled power supply and a load, the driver circuit comprising an oscillator and a ballast switch driven by the oscillator so as to draw a pulsed current from the TRIAC for driving the load.

The driver circuit of the second aspect of the present invention may be ultilised to implement the method of the first aspect of the present invention and may incorporate any features thereof as desired or as appropriate.

Preferably, the load is a light source. Most preferably, the light source is a low energy light source such as an LED.

The ballast switch is preferably provided with a ballast load of one or more resistors. A suitable first ballast resistor may be provided between the ballast switch and the mains supply. A suitable second ballast resistor may be provided between the oscillator and the ballast switch.

The method includes the step of monitoring the throughput current level. This may involve comparing the throughput current level with a predetermined threshold level. The threshold level may be substantially equal to the minimum current required for reliable triggering and ongoing operation of the TRIAC. The method as detailed in the first aspect of the present invention may only be implemented if the throughput current is below the threshold level. In the event that the throughput current is greater than the predetermined level conventional driving with a steady current may be implemented. Such functionality may be implemented by provision of a detector operable to monitor the throughput power and connect or disconnect the oscillator and ballast switch as required.

In such an embodiment, the load and the ballast switch may be driven by a single output or by separate dedicated outputs. A single oscillator may be provided for driving both the load and the ballast switch. Alternatively, separate oscillators may be provided for driving the load and the ballast switch.

The throughput power may be controlled by a power switch between the TRIAC and the power supply. The power supply may be a mains supply. The power switch may be a dimmer switch. The driver circuit may incorporate rectification means if required or desired.

According to a third aspect of the invention there is provided a light source operable in accordance with the method of the first aspect of the present invention and/or comprising a driver circuit in accordance with the second aspect of the present invention.

In order that the invention is more clearly understood specific examples will be described in greater detail below by way of example only and with reference to the following drawings, in which:
Figure 1a shows a first embodiment of a circuit for driving a load according to the present invention;
Figure 1b shows a second embodiment of a circuit for driving a load according to the present invention;
Figure 1c shows a third embodiment of a circuit for driving a load according to the present invention;
Figure 1d shows a fourth embodiment of a circuit for driving a load according to the present invention; and
Figure 2 shows a particular implementation of a circuit according to the first embodiment of the present invention.

Referring now to figure la, circuitry for driving an LED light source 100 from a mains supply 10 is shown. Before reaching the driver circuit 40 for LED 100, the mains supply 10 passes via a TRIAC dimmer 20 and a rectifier 30. The TRIAC dimmer 20 may comprise a dimmer switch in series with a TRIAC. The rectifier 30 is provided to convert the AC mains supply 10 to DC.

Turning now to the driver circuit 40, this comprises a load switch 41 for controlling the driving of the LED 100, a ballast switch 42 for controlling the driving of a ballast resistance 43 and and oscillator/driver 44 for controlling the load switch 41 and ballast switch 42. The oscillator 44 enables the LED 100 to be driven in a constant or pulsed manner and the ballast 43 to be driven in a pulsed manner.

In conventional driver circuits, even if an oscillator 44 is provided operable to drive LED 100 in a pulsed manner such a circuit would however draw power from the mains supply at a constant rate (and thus with a constant current). If the dimmer switch is used to reduce the power supplied from the mains 10, the current level in the TRIAC will drop. If this drops below a minimum current level, the TRIAC will trigger but will not continue operating reliably and hence no power is supplied to the LED 100. In such cases the dimmer switch is thus only partly effective as below a certain power level (and hence light output) the power throughput and hence light output drops to zero.

In the present invention, this is solved by driving the ballast 43, via ballast switch 42, in a pulsed manner as controlled by the oscillator/driver 44. This causes the ballast 43 and hence the circuit 40 as a whole to draw current from the mains supply 10 via the TRIAC dimmer 20 in a pulsed manner. With a suitable choice of pulse magnitude, the pulses can be larger than the threshold current of the TRIAC so that power throughput does not cease. Similarly, with a suitable choice of pulse duration, the gaps between pulses can be shorter than the reaction period of the TRIAC so that power throughput does not cease.

By suitable choice of the size of the ballast load 43, the pulsed input power received by the oscillator driver 44 will not cause significant instability in its output.

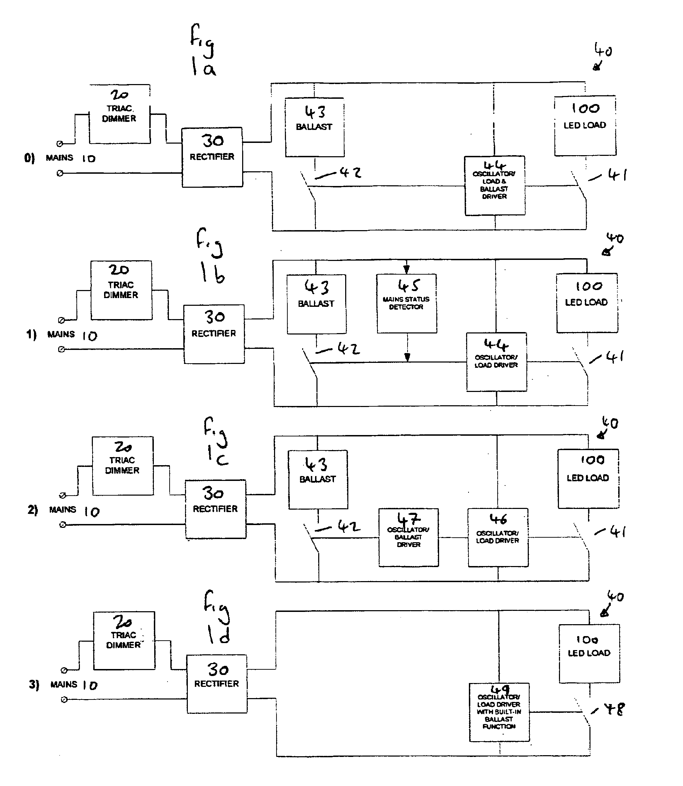

Turning now to figure 1b, an alternative embodiment of driver circuit 40 is shown. This embodiment differs from that shown in figure 1a in the provision of a mains status detector 45. The mains status detector 45 is operable to monitor the current throughput of the driver circuit 40. If the current throughput is greater than a predetermined level (typically set at slightly above the minimum current required for reliable triggering and ongoing operation of the TRIAC) the driver circuit 40 operates conventionally. If however the current drops below the predetermined level, oscillator/driver 44 is employed to control ballast switch 42 to drive ballast load 43 in a pulsed manner as described above.

Turning now to figure 1c, another alternative embodiment of driver circuit 40 is shown. This embodiment differs from that shown in figure la in the provision of separate oscillator/drivers 46, 47 for driving the LED 100 and the ballast 43 respectively.

Turning now to figure 1d, a further alternative embodiment is shown. In this embodiment, a single oscillator/driver 49 is provided with an internal ballast load. This oscillator/driver 49 drives the LED 100 and draws input power in a pulsed manner via a single combined load/ballast switch 48.

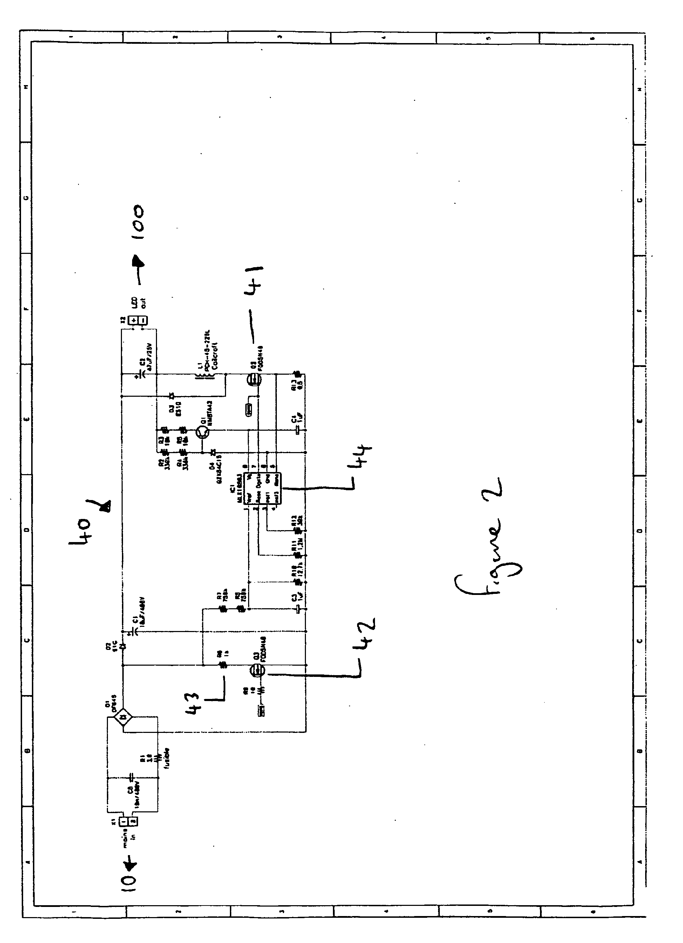

Turning now to figure 2, a schematic illustration of the implementation of a circuit 40 according to the first above embodiment is shown. In this schematic, input power supply from the TRIAC is received at the upper left and the contacts for supplying power to the LED 100 are at the upper right. The load switch 41 is embodied by transistor Q2 at the lower right. The oscillator/driver 44 is the integrated circuit in the lower part of the illustration. The output of the oscillator/driver 44 is additionally fed to transistor Q3 which embodies the ballast switch 42. The ballast load 43 is embodied by R6 however a secondary ballast load R9 may be optionally provided between the oscillator/driver 44 and the ballast switch 42 to improve stability.

## Claims

1. A method of driving a load wherein the load is supplied with power via a TRIAC, the method comprising the steps of: drawing a pulsed current from the TRIAC, the magnitude of the current pulses being larger than the minimum current required for reliable triggering and ongoing operation of the TRIAC and the duration of the current pulses is choosen such that the gaps between the pulses are shorter than the reaction period of the TRIAC.

2. A method as claimed in claim 1 wherein the method includes the step of monitoring the throughput current level.

3. A method as claimed in claim 2 wherein this involves comparing the throughput current level with a predetermined threshold level.

4. A method as claimed in claim 3 wherein the threshold level is substantially equal to the minimum current required for reliable triggering and ongoing operation of the TRIAC.

5. A method as claimed in claim 4 wherein the method is only implemented if the throughput current is below the threshold level.

6. A driver circuit (40) suitable for being provided between a TRIAC controlled power supply and a load, the driver circuit comprising an oscillator (44) and a ballast switch (42) driven by the oscillator so as to draw a pulsed current from the TRIAC for driving the load **characterised in that** the magnitude of the current pulses is larger than the minimum current required for reliable triggering and ongoing operation of the TRIAC and the duration of the current pulses is choosen such that the gaps between the pulses are shorter than the reaction period of the TRIAC.

7. A driver circuit as claimed in claim 6 wherein the load is a light source.

8. A driver circuit as claimed in claim 7 wherein the light source is a low energy light source such as an LED.

9. A driver circuit as claimed in any one of claims 6 to 8 wherein the ballast switch is provided with a ballast load of one or more resistors.

10. A driver circuit as claimed in claim 9 wherein a first ballast resistor is provided between the ballast switch and the mains supply.

11. A driver circuit as claimed in claim 9 or claim 10 wherein a second ballast resistor is provided between the oscillator and the ballast switch.

12. A driver circuit as claimed in any one of claims 6 to I 1 wherein a detector is provided, the detector being operable to monitor the throughput power and connect or disconnect the oscillator and ballast switch as required.

13. A driver circuit as claimed in any one of claims 6 to 12 wherein the load and the ballast switch are driven by a single output or by separate dedicated outputs.

14. A driver circuit as claimed in any one of claims 6 to 13 wherein a single oscillator is provided for driving both the load and the ballast switch.

15. A driver circuit as claimed in any one of claims 6 to 14 wherein separate oscillators are provided for driving the load and the ballast switch.

16. A driver circuit as claimed in any one of claims 6 to 15 wherein the throughput power is controlled by a power switch between the TRIAC and the power supply.

17. A driver circuit as claimed in claim 16 wherein the power supply is a mains supply.

18. A driver circuit as claimed in any one of claims 16 to 17 wherein the power switch is a dimmer switch.

19. A driver circuit as claimed in any one of claims 6 to 18 wherein the driver circuit incorporates rectification means.

20. A light source operable in accordance with the method of any one of claims 1 to 5 and/or comprising a driver circuit in accordance with any one of claims 6 to 19.

## Patentansprüche

1. Ein Verfahren zum Antreiben einer Last, wobei die Last über einen TRIAC mit Strom versorgt wird, wobei das Verfahren folgende Schritte umfasst: Abziehen eines gepulsten Stromes von dem TRIAC, wobei die Größe der Strompulse größer ist als der minimale Strom, der für eine zuverlässige Auslösung des Betriebes und fortgesetzten Betrieb des TRIAC erforderlich ist, und wobei die Dauer der Strompulse so gewählt wird, dass die Lücken zwischen den Pulsen kürzer sind als die Reaktionsperiode des TRIAC.

2. Ein Verfahren nach Anspruch 1, wobei das Verfahren den Schritt der Überwachung des Durchgangsstromniveaus umfasst.

3. Ein Verfahren nach Anspruch 2, wobei es den Vergleich des Durchgangsstromniveaus mit einem festgelegten Schwellenwert umfasst.

4. Ein Verfahren nach Anspruch 3, wobei der Schwellenwert im Wesentlichen gleich dem minimalen Strom ist, der für das zuverlässige Auslösen des Betriebes und den fortschreitenden Betrieb des TRIAC erforderlich ist.

5. Ein Verfahren nach Anspruch 4, wobei das Verfahren nur dann angewandt wird, wenn der Durchgangsstrom unterhalb des Schwellenwertes liegt.

6. Eine Antriebsschaltung (40), die dazu geeignet ist, zwischen einer TRIAC-gesteuerten Stromzufuhr und einer Last vorgesehen zu werden, wobei die Antriebsschaltung einen Oszillator (44) und einen Ballastschalter (42) umfasst, der durch den Oszillator so angetrieben wird, dass er einen gepulsten Strom von dem TIRAC abzieht, um die Last anzutreiben, **dadurch gekennzeichnet, dass** die Größe der Strompulse größer ist als der minimale Strom, der für das zuverlässige Auslösen des Betriebes und den fortschreitenden Betrieb des TRIAC erforderlich ist, und dass die Dauer der Strompulse so gewählt ist, dass die Lücken zwischen den Pulsen kürzer sind als die Reaktionsperiode des TRIAC.

7. Eine Antriebsschaltung nach Anspruch 6, wobei die Last eine Lichtquelle ist.

8. Eine Antriebsschaltung nach Anspruch 7, wobei die Lichtquelle eine Niedrigenergielichtquelle, bspw. eine LED, ist.

9. Eine Antriebsschaltung nach einem der Ansprüche 6 bis 8, wobei der Ballastschalter eine Ballastlast mit mehreren Widerständen aufweist.

10. Eine Antriebsschaltung nach Anspruch 9, wobei ein erster Baliastwiderstand zwischen dem Ballastschalter und dem Netzanschluss vorgesehen ist.

11. Eine Antriebsschaltung nach Anspruch 9 oder Anspruch 10, wobei ein zweiter Ballastwiderstand zwischen dem Oszillator und dem Ballastschalter vorgesehen ist.

12. Eine Antriebsschaltung nach einem der Ansprüche 6 bis 11, wobei ein Detektor vorgesehen ist, wobei der Detektor betreibbar ist, um den Durchgangsstrom zu überwachen und den Oszillator und den Ballastschalter nach Bedarf anzuschließen oder abzutrennen.

13. Eine Antriebsschaltung nach einem der Ansprüche 6 bis 12, wobei die Last und der Ballastschalter durch einen einzelnen Ausgang oder durch separat zugeordnete Ausgänge angetrieben werden.

14. Eine Antriebsschaltung nach einem der Ansprüche 6 bis 13, wobei ein einzelner Oszillator vorgesehen ist, um sowohl die Last als auch den Ballastschalter anzutreiben.

15. Eine Antriebsschaltung nach einem der Ansprüche 6 bis 14, wobei separate Oszillatoren vorgesehen sind, um die Last und den Ballastschalter anzutreiben.

16. Eine Antriebsschaltung nach einem der Ansprüche 6 bis 15, wobei der Durchgangsstrom durch einen Stromschalter zwischen dem TRIAC und der Stromzufuhr gesteuert wird.

17. Eine Antriebsschaltung nach Anspruch 16, wobei die Stromzufuhr ein Netzanschluss ist.

18. Eine Antriebsschaltung nach einem der Ansprüche 16 bis 17, wobei die Stromzufuhr ein Dimmerschalter ist.

19. Eine Antriebsschaltung nach einem der Ansprüche 6 bis 18, wobei die Antriebsschaltung Gleichrichtungsmittel aufweist.

20. Eine Lichtquelle, die entsprechend dem Verfahren nach einem der Ansprüche 1 bis 5 betreibbar ist und/oder eine Antriebsschaltung nach einem der Ansprüche 6 bis 19 aufweist.

## Revendications

1. Procédé d'entraînement d'une charge dans lequel la charge est alimentée via un TRIAC, le procédé comprenant les étapes qui consistent : à absorber un courant pulsé du TRIAC, l'amplitude des impulsions du courant étant plus importante que le courant minimum nécessaire pour un déclenchement fiable et un fonctionnement continu du TRIAC et la durée des impulsions du courant est choisie de sorte que les espaces entre les impulsions soient plus courts que la période de réaction du TRIAC.

2. Procédé tel que revendiqué dans la revendication 1 dans lequel le procédé comporte l'étape qui consiste à surveiller le niveau du courant de débit.

3. Procédé tel que revendiqué dans la revendication 2 dans lequel il s'agit de comparer le niveau du courant de débit à un seuil prédéterminé.

4. Procédé tel que revendiqué dans la revendication 3 dans lequel le niveau du seuil est sensiblement égal au courant minimum requis pour un déclenchement fiable et un fonctionnement continu du TRIAC.

5. Procédé tel que revendiqué dans la revendication 4 dans lequel le procédé est mis en oeuvre seulement si le courant de débit est en-dessous du seuil.

6. Circuit d'attaque (40) adapté pour être pourvu entre un bloc d'alimentation commandé par le TRIAC et une charge, le circuit d'attaque comprenant un oscillateur (44) et un interrupteur ballast (42) entraîné par l'oscillateur de manière à absorber un courant pulsé du TRIAC pour entraîner la charge, **caractérisé en ce que** l'amplitude des impulsions du courant est plus importante que le courant minimum requis pour un déclenchement fiable et un fonctionnement continu du triac et la durée des impulsions du courant est choisie de sorte que les espaces entre les impulsions soient plus courts que la période de réaction du TRIAC.

7. Circuit d'attaque tel que revendiqué dans la revendication 6 dans lequel la charge est une source de lumière.

8. Circuit d'attaque tel que revendiqué dans la revendication 7 dans lequel la source de lumière est une source de lumière basse consommation telle qu'une diode électroluminescente.

9. Circuit d'attaque tel que revendiqué dans l'une quelconque des revendications 6 à 8 dans lequel l'interrupteur ballast est muni d'une charge de délestage d'une ou de plusieurs résistances.

10. Circuit d'attaque tel que revendiqué dans la revendication 9 dans lequel une première résistance ballast est prévue entre l'interrupteur ballast et l'alimentation secteur.

11. Circuit d'attaque tel que revendiqué dans la revendication 9 ou la revendication 10 dans lequel une deuxième résistance ballast est prévue entre 1'oscillateur et l'interrupteur ballast.

12. Circuit d'attaque tel que revendiqué dans l'une quelconque des revendications 6 à 11 dans lequel un détecteur est fourni, le détecteur pouvant fonctionner pour surveiller la puissance de débit et pour connecter ou déconnecter l'oscillateur et l'interrupteur ballast au besoin.

13. Circuit d'attaque tel que revendiqué dans l'une quelconque des revendications 6 à 12 dans lequel la charge et l'interrupteur ballast sont entraînées par une seule sortie ou par des sorties dédiées séparées.

14. Circuit d'attaque tel que revendiqué dans l'une quelconque des revendications 6 à 13 dans lequel un seul oscillateur est prévu pour entraîner la charge et l'interrupteur ballast à la fois.

15. Circuit d'attaque tel que revendiqué dans l'une quelconque des revendications 6 à 14 dans lequel les oscillateurs séparés sont prévus pour entraîner la charge et l'interrupteur ballast.

16. Circuit d'attaque tel que revendiqué dans l'une quelconque des revendications 6 à 15 dans lequel la puissance de débit est commandée par un interrupteur d'alimentation entre le triac et le bloc d'alimentation.

17. Circuit d'attaque tel que revendiqué dans la revendication 16 dans lequel le bloc d'alimentation est une alimentation secteur.

18. Circuit d'attaque tel que revendiqué dans l'une quelconque des revendications 16 à 17 dans lequel l'interrupteur d'alimentation est un interrupteur à gradation de lumière.

19. Circuit d'attaque tel que revendiqué dans l'une quelconque des revendications 6 à 18 dans lequel le circuit d'attaque incorpore un moyen redresseur.

20. Source de lumière pouvant fonctionner conformément au procédé de l'une quelconque des revendications 1 à 5 et/ou comprenant un circuit d'attaque conformément à l'une quelconque des revendications 6 à 19.
